# EUROPEAN PATENT APPLICATION

(11) **EP 0 973 270 A2**
(43) Date of publication of application: **19.01.2000**
(21) Application number: 99113714.2
(22) Date of filing: 13.07.1999
(51) Int. Cl.: H04B 1/18, H04B 1/38, H01Q 1/00, H04M 1/76

(54) **Variable impedance matching circuit and portable phone employing the same**

(30) Priority: 14.07.1998 KR 9828244
(71) Applicant: Ace Technology, Seoul 137-130 (KR)
(72) Inventor: Koo, Gwan Young, Puchon 420-023, Kyunggi-do (KR)
(74) Representative: von Samson-Himmelstjerna, Friedrich R., Dipl.-Phys.

(57) **Abstract**

An impedance matching circuit (24) for matching the impedance of an antenna assembly of a portable phone to the impedance of a signal processing circuit (28) of the portable phone. In the impedance matching circuit (24), a detection means (28) detects a carrier frequency of the RF signal and generates a control signal representing a detected carrier frequency. A matching subcircuit (30) impedance matches between the antenna (10) and the signal processing circuit (28) based on the detected carrier frequency. The matching subcircuit (30) impedance matches the antenna (10) to the signal processing circuit (28) with respect to a frequency band of which center is substantially the detected carrier frequency.

## Description

### BACKGROUND OF THE INVENTION

### 1. Field of the Invention

The present invention relates to a portable phone, and more particularly, to an impedance matching circuit for matching an impedance of an antenna assembly to that of a signal processing circuit of the phone. This application for an impedance matching circuit is based on Korean Patent Application No. 98-28244, which is incorporated by reference herein for all purposes.

### 2. Description of the Related Art

An antenna assembly used in a portable phone such as a cellular phone and a personal communications service (PCS) phone typically includes a combination of a whip antenna and a helical antenna both of which have electrical lengths of λ/4. In such an antenna assembly, only the helical antenna is operable and effects on a antenna characteristics when the whip antenna is in its retracted position. Meanwhile, when the whip antenna is in its extended position, both the whip antenna and the helical antenna are operable and effect on the antenna characteristics. Here, depending on the specific configuration of the antenna assembly, the whip antenna and the helical antenna are connected in series to show a combined characteristics of an antenna of λ/2-length or connected in parallel to show a combined characteristics of an antenna of λ/4-length.

On the other hand, a receiving sensitivity and the efficiency of transmitting radiation power is important in the portable phone because of the small sizes of the phone and antenna, and high data rate of the transmission. Particularly, the efficiency of the antenna is more significant for a signal reception than for a signal transmission. In order that the efficiency of the antenna is maximized, most of the portable phones include an impedance matching circuit disposed between the antenna and a signal processing circuit in the phone. More particularly, some of the conventional portable phones employ variable impedance matching circuits which carries out optimum matching operations for a call waiting state and a calling state, respectively. One of the variable impedance matching circuits is disclosed in U.S. Patent No. 5,335,368 issued 2 August 1994 to Yoshiharu Tamaru and entitled **PORTABLE RADIO APPARATUS HAVING VARIABLE IMPEDANCE MATCHING CIRCUIT BETWEEN ANTENNA AND RADIO CIRCUIT**.

In such a portable phone adopting the variable impedance matching circuit, the impedance matching circuit may be designed so as to impedance-matches the antenna apparatus to the signal processing circuit for a signal receiving frequency band when the whip antenna is in its retracted position. Meanwhile, when the whip antenna is in its extended position, the impedance matching circuit may impedance-matches the antenna apparatus to the signal processing circuit for a central frequency of a frequency band encompassing the signal receiving frequency band and a signal transmission band.

However, a channel frequency band in which a call is actually set up for a terminal occupies just a small portion of the total frequency band. Moreover, the channel frequency may differ for each call. For example, in a Code Division Multiple Access (CDMA) cellular phone system which utilizes 10 MHz of frequency bands for each of the forward and reverse links, a terminal accesses a base station by use of one of seven frequency allocations (FA's). Here, the FA used by the terminal to access the base station may change for each call. Such a phenomenon that the channel frequency changes for each call similarly occurs to other kinds of mobile phone system including the GSM system adopting a Time Division Multiple Access (TDMA) scheme.

If the channel frequency assigned specifically changes for each call, the antenna may not be exactly matched to the signal processing circuit for the assigned channel frequency and thus the efficiency of the antenna may not be maximized. The mismatching of the impedances between the antenna and the signal processing circuit may be critical in the future because the sizes of the terminal and the antenna is getting smaller and the antenna is expected to exhibit a tendency of being built in the terminal.

### SUMMARY OF THE INVENTION

One object of the present invention is to provide an impedance matching circuit for matching the impedance of an antenna assembly of a portable phone to the impedance of a signal processing circuit of the portable phone with respect to a specific channel frequency by which the portable phone accesses a base station in a calling state.

Another object of the present invention is to provide a portable phone including an impedance matching circuit which is capable of matching the impedance of an antenna assembly of the portable phone to the impedance of a signal processing circuit of the portable phone with respect to a channel frequency by which the portable phone accesses a base station in a calling state.

An impedance matching circuit for achieving one of the above objects is suitable for a portable phone having an antenna and a signal processing circuit for processing a voice signal to provide a modulated voice signal to the antenna and processing a RF signal from the antenna. In the impedance matching circuit, a detection means detects a carrier frequency of the RF signal and generates a detection signal representing a detected carrier frequency. A matching subcircuit impedance matches between the antenna and the signal processing circuit based on the detected carrier frequency. The matching subcircuit impedance matches the antenna to the signal processing circuit with respect to a frequency band of which center is substantially the detected carrier frequency.

In a portable phone for achieving another one of the above objects, a signal processing circuit processes a voice signal to provide a modulated voice signal to an antenna and processes a RF signal from the antenna. An impedance matching circuit impedance matches between the antenna and the signal processing circuit. A detection means detects a carrier frequency of the RF signal and generates a detection signal representing a detected carrier frequency. The impedance matching circuit impedance matches the antenna to the signal processing circuit based on the detected carrier frequency, so that an impedance matching is established with respect to a frequency band of which center is substantially the detected carrier frequency.

### BRIEF DESCRIPTION OF THE DRAWINGS

The above objectives and advantages of the present invention will become more apparent by describing in detail preferred embodiments thereof with reference to the attached drawings in which:
FIG. 1 illustrates an embodiment of a portable phone according to the present invention;
FIG. 2 is a block diagram of the matching circuit shown in FIG. 1;
FIG. 3 is a circuit diagram of an embodiment of the matching circuit shown in FIG. 1; and
FIG. 4 is a flowchart showing the impedance matching operation in the portable phone of FIG. 1.

### DESCRIPTION OF THE PREFERRED EMBODIMENTS

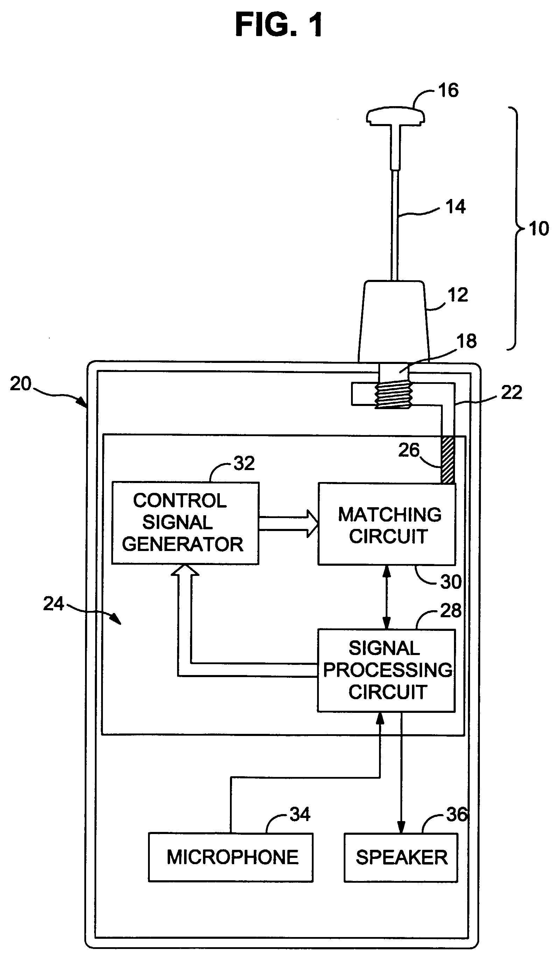

Referring to FIG. 1, a portable phone according to a preferred embodiment includes an antenna assembly 10, a printed circuit board 24, a microphone 34, and a speaker 36. In the preferred embodiment, the portable phone is suitable for being used in a Code Division Multiple Access (CDMA) cellular communication system based on the Interim Standard 95 (IS-95) protocol recommended by the Telecommunications Industry Association (TIA) and Electronic Industries Association (EIA) in the United States.

The antenna assembly 10 includes a helical antenna 12 and a whip antenna 14 installed so as to be movable upward and downward inside the hole penetrating the center of the helical antenna 12. The whip antenna 14 is provided with a knob 16 at the top end thereof so that a user of the phone extends or retracts the whip antenna easily. The antenna assembly 10 is installed onto the phone by engaging a screw pattern formed on the outer circumferential surface of the sleeve 18 attached at the bottom of the helical antenna 12 with a connector 22 installed in a housing 20 of the phone.

On the printed circuit board 24 is disposed several circuits including a signal processing circuit 28, an matching circuit 30, and a control signal generator 32. While a traffic channel is established between the phone and a base station, the signal processing circuit 28 encodes and modulates a voice signal from the microphone and provides the modulated signal to the antenna assembly 10 through the matching circuit 30, so that the antenna assembly 10 radiates the modulated signal as a radio wave. Also, the signal processing circuit receives a RF signal received by the antenna assembly 10 via the matching circuit 30, and demodulates and decodes the RF signal to provide the decoded voice signal to the speaker 36.

Also, the signal processing circuit 28 includes a not shown detection circuit microprocessor for detecting a frequency assignment (FA) by which the phone may access a base station and provides a detection signal to the control signal generator 32. As will be described below, the matching circuit 30 performs an impedance matching operation adaptively to the frequency assignment (FA) according to the detection signal. In a Code Division Multiple Access (CDMA) cellular phone system which utilizes 10 MHz of frequency bands for each of the forward and reverse links, the phone terminal may access the base station by use of one of not more than seven frequency allocations (FA's). The specific number of frequency allocations (FA's) available in a cell is determined on the basis of the historical traffic data in the cell. The signal processing circuit 28 detects the frequency assignment (FA) by which the phone actually accesses the base station in the cell. Additionally, the signal processing circuit 28 is capable of receiving and processing a paging signal from the base station in a idle state and generating access channel data.

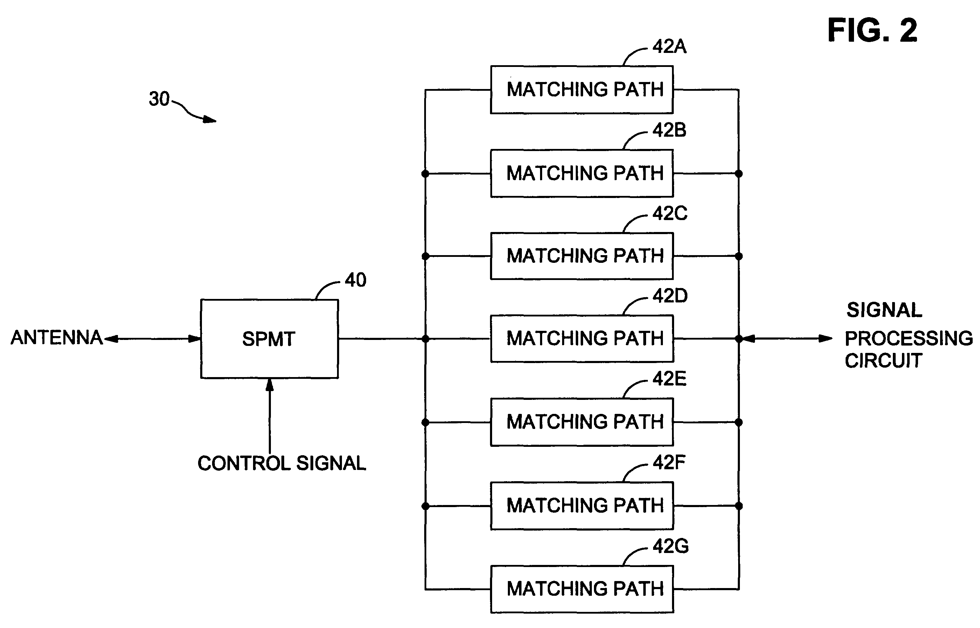

In FIG. 1, the control signal generator 32 receives the detection signal from the signal processing circuit 28 and generates a switching control signal for controlling the matching circuit 30. In the present embodiment, the switching control signal consists of 3 bits and has TTL signal level. As shown in FIG 2, the matching circuit 30 includes a single-pole multiple-throw (SPMT) switch and seven signal paths 42A through 42G each of which is capable of carrying out impedance matching operation. Also, the matching circuit is electrically connected to the antenna connector 22 by a micro strip transmission line 26 formed on the printed circuit board 24. The matching circuit 30 activates one of the seven signal paths 42A through 42G in response to the switching control signal so as to perform the impedance matching operation adaptively to the frequency assignment (FA) by which the phone accesses the base station.

In a cellular phone system, separate frequency bands are allocated for forward and reverse links, so that a portable phone accesses the base station based on a frequency division multiplexing scheme to transmit and receive signals to and from the base station. Meanwhile, the signal transmission efficiency is less significant than the signal reception efficiency in the portable phone because the base station has high gain antenna system and sophisticated power control and decoding capability. Thus, the matching circuit according to the present invention is designed so as to perform an optimum impedance matching operation with respect to the frequency band allocated for the forward link, i.e., the band used by the phone for receiving RF signal from the base station.

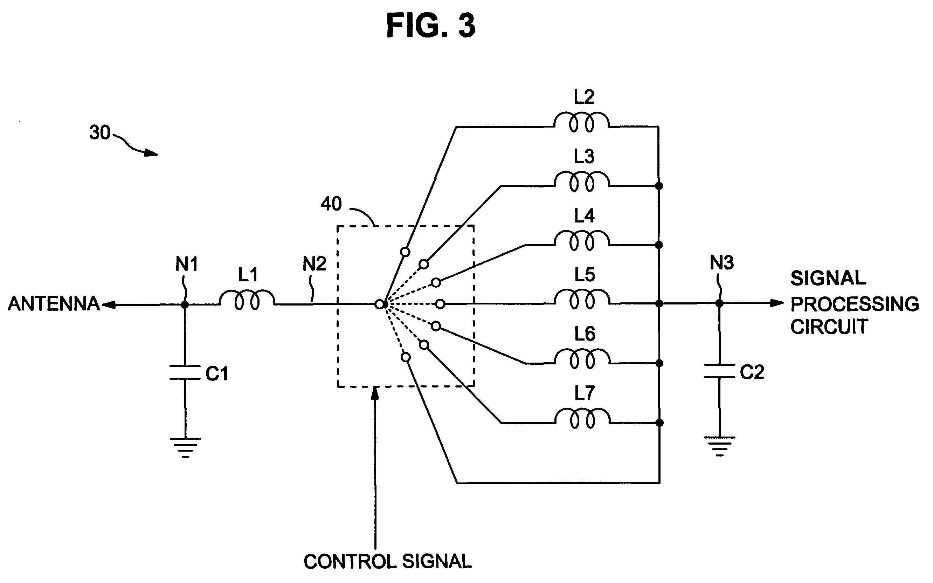

FIG. 3 shows the matching circuit shown in FIG. 1 in detail. The matching circuit 30 has an overall topology of a conventional π-type matching circuit, which consists of one inductor and two capacitors connected between two ends of the inductor and ground, respectively. In FIG. 3, the matching circuit 30 includes two capacitors C1 and C2, and seven inductors L1 through L7 in addition to the SPMT switch 40. The inductances of the inductors L2 through L7 are different from one another. The capacitor C1 is connected between a node N1 and ground. The capacitor C2 is connected between a node N3 and ground. The inductors L1 through L7 and the SPMT switch 40 is disposed between the nodes N1 and N2.

In the present embodiment, the SPMT switch 40 has a single input terminal and seven output terminals. The input terminal of the SPMT switch 40 is selectively connected to one of a first through a seventh output terminals in response to the control signal. The Inductor L1 is connected between the node N1 and the input terminal of the SPMT switch 40 which is designated as a node N2 in the drawing. The inductors L2 through L7 are connected between the first through the sixth output terminals of the SPMT switch 40 and the node N3, respectively. The seventh output terminal of the SPMT switch 40 is directly coupled with the node N3.

When the input terminal of the SPMT switch 40 is connected, in response to the control signal, to the first output terminal, the effective inductance of the path between the nodes N1 and N3 is the sum of inductances of the inductors L1 and L2. Similarly, when the input terminal of the SPMT switch 40 is connected to another one of the other output terminals, the effective inductance shows another value which is specifically determined according to the switching position. Thus, the effective inductance of the path between the nodes N1 and N3 changes according to the control signal. Accordingly, the matching circuit 30 can impedance match optimally between the antenna assembly and the signal processing circuit with respect to the frequency allocation (FA).

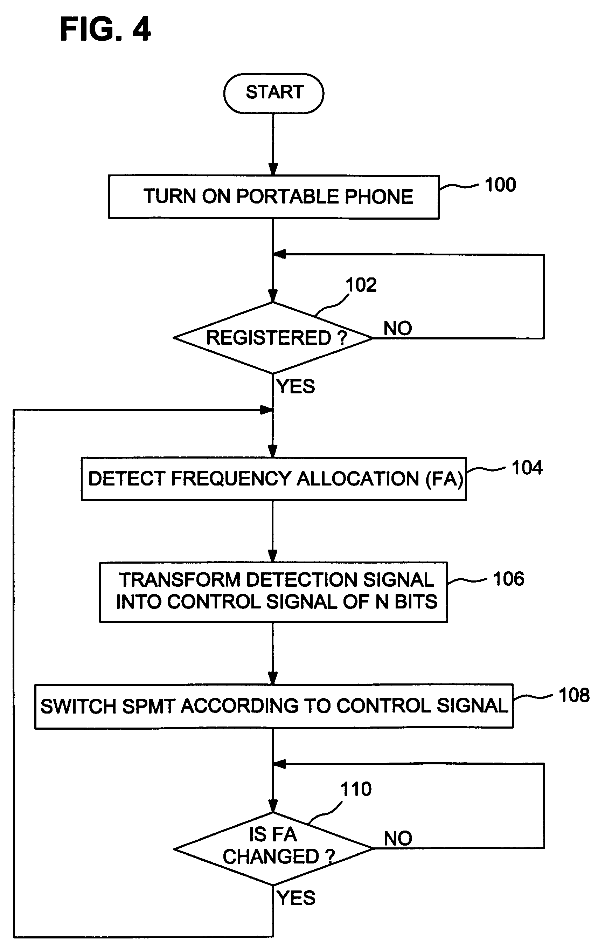

FIG. 4 illustrates the impedance matching operation in the portable phone of FIG. 1. When the user of the portable phone powers on the phone in step 100, a certain registration procedure is carried out (step 102). During the registration procedure, a specific frequency (FA) is allocated to the portable phone. The number of the available frequency allocations (FA's) and a primary frequency may vary depending on the zone in which the portable phone is located. In step 104, the signal processing circuit 28 detects the allocated frequency and generates the detection signal. The control signal generator 32 transforms the detection signal into the control signal of three bits (step 106). The SPMT switch 40 in the matching circuit 30 switches according to the control signal, and the impedance matching is carried out by the matching circuit 30 of which configuration is determined by the switching operation (step 108).

When the portable phone enters a new zone in which number of the available frequency allocations (FA's) is different from that in the previous zone, a new frequency may be allocated to the portable phone. Thus, the signal processing circuit 28 determines continuously whether the frequency allocation (FA) has been changed (step 110). If the frequency allocation (FA) has been changed, the signal processing circuit 28 provides a new detection signal to the control signal generator 32, so that the matching circuit 30 adapts its circuit configuration to the new frequency.

Although the present invention has been described in detail above, it should be understood that the foregoing description is illustrative and not restrictive. Those of ordinary skill in the art will appreciate that many obvious modifications can be made to the invention without departing from its spirit or essential characteristics. For example, this invention may be applicable to other kinds of mobile phone system adopting a Time Division Multiple Access (TDMA) scheme although the preferred embodiment was described based on CDMA scheme. In such an embodiment, the channel frequencies may be categorized into some frequency groups based on their levels so that the switching operation is carried out with respect to one of the frequency groups. Also, the matching circuit of FIG. 3 can be changed so that the capacitance of capacitors C1 or C2 rather than the inductance varies alternatively. Accordingly, the scope of the invention should be interpreted in the light of the following appended claims.

## Claims

1. In a portable phone having an antenna (10) and a signal processing circuit (28) for processing a voice signal to provide a modulated voice signal to the antenna (10) and processing a RF signal from the antenna (10), an impedance matching circuit (24) comprising:
means (28) for detecting a carrier frequency of the RF signal and generating a detection signal representing a detected carrier frequency; and
a matching subcircuit (30) for matching impedances between the antenna (10) and the signal processing circuit (28) based on the detected carrier frequency,
wherein the matching subcircuit (30) impedance matches the antenna (10) to the signal processing circuit (28) with respect to a frequency band of which center is substantially the detected carrier frequency.

2. The impedance matching circuit as claimed in claim 1, wherein the matching subcircuit (30) comprises:
a plurality of signal paths (42A; ...; 42G); and
a single-pole multiple-throw (SPMT) switch (40) for activating one of the plurality of signal paths (42A; ...; 42G),
wherein each of the plurality of signal paths (42A; ...; 42G) comprises one selected from a group consisting of at least one inductor (L1; ... L7), at least one capacitor (C1; C2), and a combination of at least one inductor (L1; ...; L7) and at least one capacitor (C1; C2).

3. The impedance matching circuit as claimed in claim 1, wherein the matching subcircuit (30) further comprises a micro strip transmission line (26) for connecting the antenna (10) and the matching subcircuit (30).

4. A portable phone comprising:
an antenna (10);
a signal processing circuit (28) for processing a voice signal to provide a modulated voice signal to the antenna (10) and processing a RF signal from the antenna (10),
an impedance matching circuit (30) for matching impedances between the antenna (10) and the signal processing circuit (28); and
means (28) for detecting a carrier frequency of the RF signal and generating a detection signal representing a detected carrier frequency,
wherein the impedance matching circuit (30) impedance matches the antenna (10) to the signal processing circuit (28) based on the detected carrier frequency, so that an impedance matching is established with respect to a frequency band of which center is substantially the detected carrier frequency.

5. The portable phone as claimed in claim 4, wherein the impedance matching circuit (30) comprises:
a plurality of signal paths (42A, ...; 42G); and
a single-pole multiple-throw (SPMT) switch (40) for activating one of the plurality of signal paths (42A; ...; 42G),
wherein each of the plurality of signal paths (42A; ...; 42G) comprises one selected from a group consisting of at least one inductor (L1; ...; L7), at least one capacitor (C1; C2), and a combination of at least one inductor(L1; ...; L7) and at least one capacitor (C1; C2).

6. The portable phone as claimed in claim 4, further comprising a micro strip transmission line (26) for connecting the antenna (10) and the matching subcircuit (30).
